# EUROPEAN PATENT APPLICATION

(11) **EP 1 574 681 A1**
(43) Date of publication of application: **14.09.2005**
(21) Application number: 04005771.3
(22) Date of filing: 11.03.2004
(51) Int. Cl.: F01N 3/28, F02B 37/00

(54) **Exhaust turbine with down-pipe diffuser**

(71) Applicant: Ford Global Technologies, LLC, Dearborn, MI 48126 (US)
(72) Inventor: Tabar, Said, 418 75 Göteborg (SE); Green, Tony Sr., 418 43 Göteborg (SE)
(74) Representative: Widahl, Jenny Marie

(57) **Abstract**

The invention relates to an exhaust turbine arrangement in a vehicle comprising an exhaust turbine (310) arranged to be driven by exhaust gases from an internal combustion engine in the vehicle, said exhaust turbine (310) comprising a turbine housing (312), a turbine wheel (315), and a turbine wheel outlet (340) wherein a first end (362) of an exhaust down-pipe member (360) is arranged to mate directly to the turbine wheel outlet (340), said down pipe member (360) having a flow cross section that generally increases in a direction away from the turbine wheel outlet (340) in order for said down-pipe member (360) to fill the function of a turbine diffuser.

The invention is especially advantageous for providing an earlier light-off time of a catalytic converter at cold starts and for improving the overall efficiency of the exhaust turbine.

## Description

### TECHNICAL FIELD

The invention relates to an exhaust turbine arrangement in a vehicle comprising an exhaust turbine arranged to be driven by exhaust gases from an internal combustion engine in the vehicle, said exhaust turbine comprising a turbine housing, a turbine wheel, and a turbine wheel outlet.

### BACKGROUND

Internal combustion engines for vehicles can be provided with turbo chargers for increased specific power output. Petrol engine turbo chargers are usually provided with a waste gate for by-passing the turbine wheel in order to control intake boost pressure and turbo speed. A waste gate turbocharger has a reduced working range compared to turbo charger with variable turbine geometry.

In turbo charged diesel engines, on the other hand, it is in many cases possible to arrange adjustable guide vanes on the turbine side of the turbo charger and thereby making a waste gate unnecessary. This is possible because the temperature of exhaust gases in a diesel engine is generally lower than petrol engine exhaust. Requirements on temperature resistance and durability of the adjustable guide vane materials can readily be fulfilled, while it would be much more expensive to fulfill these demands for guide vanes in a petrol engine turbo charger. Apart from some special cases, adjustable guide vanes make a waste gate unnecessary since the adjustable guide vanes adapt the turbine geometry to different exhaust flow conditions.

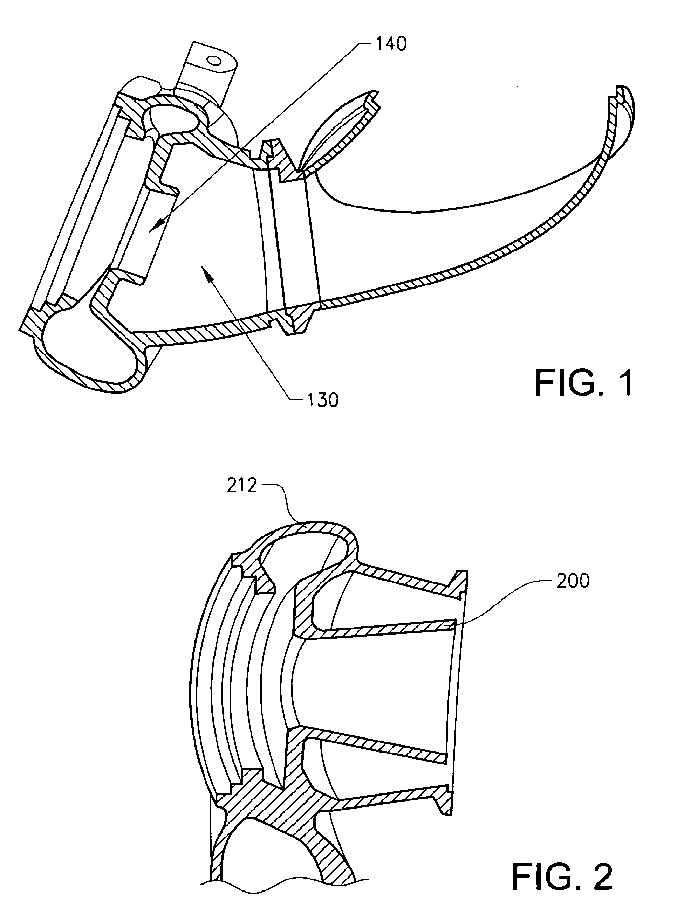

A prior art turbine is shown in Fig 1. In this turbine the turbine wheel outlet 140 abruptly emanates inside a turbine outlet housing. An exhaust down-pipe is fixed to a flange at the down stream end of an outlet housing 130. This solution implies that the high dynamic pressure at the turbine wheel abruptly changes to a high static pressure as the exhaust gases pass into the outlet housing 130. A sudden high static pressure entail a flow resistance as seen from the turbine wheel outlet 140. In other words, the standard turbine of Fig 1 has the disadvantage that the dynamic head of the flow coming out from the turbine wheel is basically lost due to the sudden expansion in the outlet housing, i.e. the dynamic head dissipates to losses. Therefore, it is room for improvement of the efficiency of such a turbine. Also the sudden expansion of the exhaust gases might negatively influence the exhaust gas temperature so that it is difficult to reduce the light-off time of a catlytic converter.

Fig 2 shows a prior art turbine for increased efficiency. A diffuser 200 is cast in the same piece as the turbine housing 212. The diffuser 200 represents a smooth increase in the flow cross section. The dynamic pressure of exhaust gases will then transform smoothly to a static pressure as the exhaust gases flow towards an exhaust down-pipe. As a result the efficiency of the turbine will be increased. However, a drawback of this solution is that the cast-in diffuser adds extra weight to the component. Further, the weight of the cast material in the diffuser add a substantial thermal inertia to the component. This means that the light-off time of a catalytic converter downstream of the turbine housing will be prolonged which is negative for the exhaust gas emissions of the vehicle. Another drawback is that the casting procedure is more complicated and adds costs for advanced tooling. Yet another drawback is that the component will be less compact since the diffuser need to have a certain length to work effeciently.

### SUMMARY OF THE INVENTION

An object of present invention is to improve efficiency and compactness, and reduce the weight of the previously described turbines. Another object if the invention is to reduce the light-off time of a catalytic converter cleaning exhaust gases from a turbo charged internal combustion engine. Still a further object of the invention is to provide a turbo charged internal combustion engine that is more fuel efficient and that exhausts less unhealthy emissions.

These and other objects are at least in part attained by an arrangement according to appended claim 1.

By arranging a down-pipe member diffuser to be connected to a close coupled catalytic converter a major part (50-60%) of the dynamic head will be recovered. That is, the dynamic pressure in turbine is smoothly converted to a static pressure as the exhaust gases pass down from the turbine wheel outlet to the catalytic converter. Flow resistance caused by the static pressure experienced by the turbine is significantly decreased and the turbine efficiency is thereby increased. The flow at the turbine outlet will especially be stabilised at low mass flows which means more turbine power and increased low-end torque of the engine.

Yet another advantage of a down-pipe member diffuser connected to a close coupled catalytic converter according to an embodiment of the invention is that the pressure drop between the turbine wheel outlet and the catalyst substrate will be reduced. The reduced pressure drop means also reduced temperature loss of the exhaust gases and an earlier light-off of the catalytic converter after cold start of the engine. Compared to the prior art shown in Fig 2 the present invention also provides a turbine arrangement with reduced temperature loss due to less thermal inertia in the area from turbine housing to catalytic converter.

Another advantage of present invention is that standard turbo chargers can be used instead of tailored turbine housings with cast diffuser, i.e. cheaper components.

The size of the turbine housing and the packaging situation relating to present invention are also advantageuos.

In this context a close coupled catalytic converter is meant to be understood as a catalytic converter arranged close to the engine in the engine compartment of a vehicle, as distinguished from for example a floor catalytic converter arranged under the floor farther away from the engine.

By down-pipe member is in this application meant any part of an exhaust system or any component mounted in or on the exhaust system.

By flow cross section is meant the cross section available for exhaust gases to flow down ducts such as the turbine wheel outlet and the exhaust down-pipe member.

### BRIEF DESCRIPTION OF THE DRAWINGS

Fig 1 and 2 show prior art turbines for turbo charging of internal combustion engines.
Fig 3 shows a turbine and down-pipe arrangement according to an embodiment of present invention.
Fig 4 shows a detail of a turbine according to the invention.
Fig 5 shows a detail of a turbine according to another embodiment of the invention.

### DESCRIPTION OF PREFERRED EMBODIMENTS

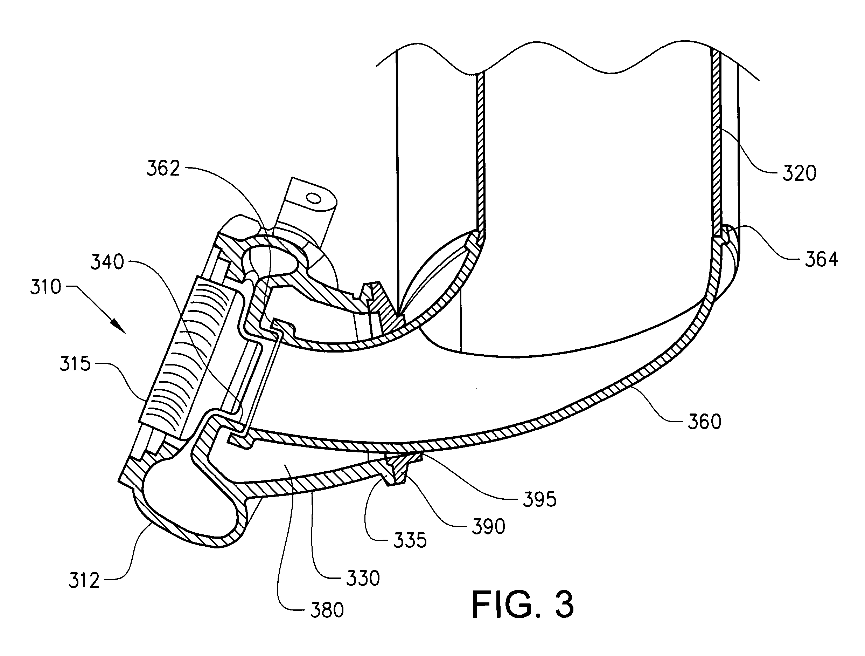

Fig 3 shows an arrangement comprising an exhaust turbine 310 and a catalytic converter inlet 360 for connection to a catalytic converter of the vehicle. Exhaust gas is driving a turbine wheel 315 which is drivably connected to a compressor wheel (not shown) on the air intake side of the engine. A turbine wheel outlet 340 with a generally circular cross section is cast in one piece with the turbine housing 312. Also cast in one piece with the turbine housing 312 is an outlet housing 330. A first flange 390 is welded to the catalytic converter inlet 360 at an outer periphery 395 of the catalytic converter inlet 360. Flange 390 is adapted to be bolted onto a second flange 335 to form a sealed gas tight connection between the outlet housing 330 and the surrounding air in the engine compartment of the vehicle.

The outlet housing 330 is convenient for providing structural stability to the exhaust turbine. Outlet housing 330 is also convenient for providing thermal insulation from the surrounding and for providing the flange 335.

Catalytic converter inlet 360 has a smoothly increasing flow cross section along the flow direction of the exhaust gases. It thereby fills the function of a turbine diffuser. Further, catalytic converter inlet 360 has a bent shape for optimal packaging in the engine compartment and for enabling close coupling of a catalytic converter.

The catalytic converter inlet 360 is made of sheet metal which makes it light-weight compared to prior art cast-in diffusers. For temperature resistance and formability reasons steel sheet is preferred.

A first end 362 of the catalytic converter inlet 360 is closely mating with the turbine wheel outlet 340 to fill the function of an excellent diffuser. However, first end 362 is not physically fixed to turbine wheel outlet 340 by any bolts or weldings. Flanges 390 and 335 assures tolerances and gas tightness. First end 362 and turbine wheel outlet 340 can either be in contact at some portions of a mating circumference or they could be positioned close to each other without being in contact. Flanges 390 and 335, and the shape of the catalytic converter inlet 360 determines how close the mating would be.

A second end 364 of catalytic converter inlet 360 is attached to a main body 320 of a close coupled catalytic converter.

The outlet housing 330 defines a volume 380 which partially contains the catalytic converter inlet 360. Thereby the first end 362 of the catalytic converter inlet 360 is contained in the turbine housing which also contains the turbine wheel outlet 340.

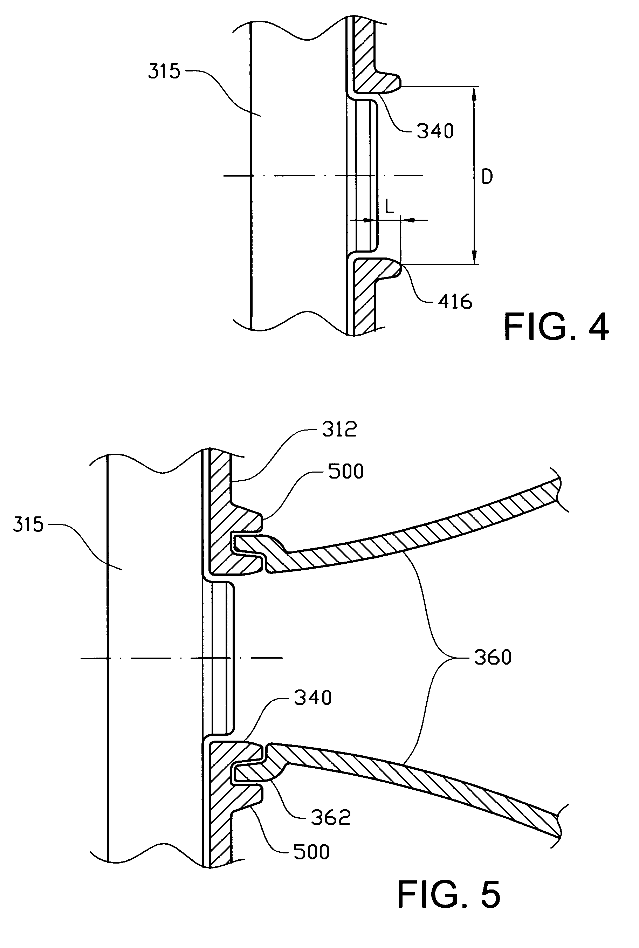

The turbine wheel outlet 340 of Fig 3 is shown in more detail in Fig 4. The length L of the turbine wheel outlet 340 is defined as a clearance distance, i.e. the distance from the axial end of the turbine wheel 315 to the point 416 where the turbine wheel outlet 340 terminates in the turbine outlet housing 330. The diameter D of the turbine wheel outlet 340 is defined as the inner diameter at the point 416 of termination. In this embodiment the length L is smaller than diameter D. Length L is just long enough to provide a close mating and a certain clearance from the turbine wheel 315.

The length L of the turbine wheel outlet 340 is less than required to fill the function of a diffuser. A diffuser with an acceptable recovery of the dynamic head would be at several times as long as the turbine wheel outlet diameter D. According to an embodiment of the invention the length L of the turbine wheel outlet 340 is shorter than twice the diameter D, preferably shorter than once the diameter D. According to the invention, a separate down-pipe member (360) will instead fill the function of a diffuser.

Preferrably, the flow cross section of turbine wheel outlet 340 is substantially constant along its extension in the flow direction. It could however also be slightly increasing in the flow direction.

In the embodiment shown in Fig 5 an additional ring 500 is cast in the same piece as the turbine housing 312 for improved fit and tightness of the mating of turbine wheel outlet 340 and the first end 362 of the catalytic converter inlet 360. In other respects this embodiment is built up in a similar way as shown in Fig 3.

According a further variation of the invention any down-pipe member could substitute the catalytic converter inlet 360, provided that said down-pipe member fills the function of a diffuser accordingly. For example in case the catalytic converter is located farther away from the engine, reference numeral 360 of Fig 3 would not be called a catalytic converter inlet but more generally an exhaust down-pipe member. Said exhaust down-pipe member would then lead to a further down-pipe and then eventually to a catalytic converter.

The invention is especially suitable for automotive vehicles such as cars and light trucks.

The embodiments disclosed above are especially advatagous for turbo charged diesel engines with adjustable guide vanes in the turbine. Excellent turbine efficiency over a wide working range is obtained, thanks to the dynamic head recovery. Environmental properties are also improved; firstly, due to shortened light-off time of the catalytic converter and, secondly, due to the improved overall efficiency and reduced fuel consumption of the engine.

The invention is not restricted to the embodiments described above but can be varied within the scope of the appended claims.

## Claims

1. An exhaust turbine arrangement in a vehicle comprising an exhaust turbine (310) arranged to be driven by exhaust gases from an internal combustion engine in the vehicle, said exhaust turbine (310) comprising a turbine housing (312), a turbine wheel (315), and a turbine wheel outlet (340), **characterised in that** a first end (362) of an exhaust down-pipe member (360) is arranged to mate directly to the turbine wheel outlet (340), said down pipe member (360) having a flow cross section that generally increases in a direction away from the turbine wheel outlet (340) in order for said down-pipe member (360) to fill the function of a turbine diffuser.

2. An arrangement according to claim 1, **characterised in that** said first end (362) of the exhaust down-pipe member (360) is contained in a turbine outlet housing (330) which also contains said turbine wheel outlet (340).

3. An arrangement according to claim 2, **characterised in that** said down-pipe member (360) is provided with a first flange (390) arranged to be fixedly connected in a gas tight manner to a second flange (335) at said turbine outlet housing (330).

4. An arrangement according to claim 3 **characterised in that** said first flange (390) is arranged at a certain distance from said first end (362).

5. An arrangement according to claim 3 or 4, **characterised in that** said first flange (390) is welded onto an outer periphery (395) of said down-pipe member (360).

6. An arrangement according to any one of the preceding claims, **characterised in that** said turbine wheel outlet (340) has a diameter D and a length L, said length L being shorter than twice the diameter D.

7. An arrangement according to claim 6, **characterised in that** the length L of the turbine wheel outlet (340) is shorter than the diameter D.

8. An arrangement according to any one of the preceding claims, **characterised in that** said exhaust down-pipe member (360) is arranged to lead exhaust gases to a close coupled catalytic converter (320) for converting constituents of the exhaust gases.

9. An arrangement according to claim 8, **characterised in that** a second end (364) of said down-pipe member (360) is connected to said catalytic converter (320).

10. An arrangement according to any one of the preceding claims, **characterised in that** the turbine wheel outlet (340) has a substantially constant flow cross section.
